(19) Europäisches Patentamt / European Patent Office / Office européen des brevets

(11) **EP 3 297 886 B1**

(12) **FASCICULE DE BREVET EUROPEEN**

(45) Date de publication et mention de la délivrance du brevet:
**12.03.2025 Bulletin 2025/11**

(21) Numéro de dépôt: **16726822.6**

(22) Date de dépôt: **20.05.2016**

(51) Classification Internationale des Brevets (IPC):
**B60W 50/00** *(2006.01)* **B60W 40/068** *(2012.01)*
**B60W 50/14** *(2020.01)* **B60W 30/14** *(2006.01)*
**B60W 40/064** *(2012.01)*

(52) Classification Coopérative des Brevets (CPC):
**B60W 40/064; B60W 30/146; B60W 40/068;**
B60K 2310/22; B60W 2050/0075; B60W 2050/146;
B60W 2420/54; B60W 2530/16; B60W 2540/30;
B60W 2552/30; B60W 2552/35; B60W 2552/40;
B60W 2555/20; B60W 2555/60; B60W 2556/10;
(Cont.)

(86) Numéro de dépôt international:
**PCT/EP2016/061474**

(87) Numéro de publication internationale:
**WO 2016/185030 (24.11.2016 Gazette 2016/47)**

(54) **PROCÉDÉ DE DÉTERMINATION D'UNE VITESSE LIMITE DE ROULAGE**

VERFAHREN ZUR BESTIMMUNG EINER GRENZGESCHWINDIGKEIT ZUM FAHREN

METHOD FOR DETERMING A LIMIT SPEED FOR DRIVING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2015 FR 1554504**

(43) Date de publication de la demande:
**28.03.2018 Bulletin 2018/13**

(73) Titulaire: **Compagnie Générale des Etablissements Michelin**
**63000 Clermont-Ferrand (FR)**

(72) Inventeurs:
• **DUVERNIER, Marc**
**63040 Clermont-Ferrand Cedex 9 (FR)**
• **PATURLE, Antoine**
**63040 Clermont-Ferrand Cedex 9 (FR)**
• **LEVRARD, Benjamin**
**63040 Clermont-Ferrand Cedex 9 (FR)**
• **LINDA, Jean-Louis**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-A1- 2 537 727   EP-A1- 2 817 189
EP-A2- 1 074 421   EP-A2- 2 082 939
WO-A1-2015/092246   IT-A1- BO20 090 184
US-A1- 2009 037 062

(52) Classification Coopérative des Brevets (CPC):
(Cont.)B60W 2556/45; B60W 2556/50;
B60W 2720/10

**Description**

DOMAINE DE L'INVENTION

La présente invention se situe dans le domaine des véhicules automobiles, et notamment dans le domaine des systèmes et dispositifs d'assistance à la conduite de tels véhicules.

Les véhicules automobiles sont aujourd'hui équipés de nombreux équipements permettant d'améliorer la sécurité du conducteur et des passagers d'un véhicule. On connait ainsi les systèmes d'assistance de freinage (ABS) permettant d'éviter le blocage des roues en cas de freinage intense. On connaît aussi les correcteurs électroniques de trajectoire (ESP), qui permettent, par un contrôle de la trajectoire, d'éviter les dérapages des véhicules.

Par ailleurs, on constate aujourd'hui qu'un nombre important d'accidents de la route sont toujours liés à des pertes de contrôle d'un véhicule, notamment en virage, lorsque les conditions d'adhérence sont mal estimées par un conducteur, qui ne se rend donc pas compte qu'il a une conduite non sécuritaire. Or, les systèmes actuels évoqués précédemment, tels l'ABS et l'ESP, ne permettent pas toujours d'éviter les pertes de contrôle du véhicule, par exemple dues à une prise de virage à une vitesse excessive.

Il apparaît donc utile de pouvoir préconiser à un conducteur une vitesse limite à respecter pour le prochain évènement prévu sur son trajet, afin d'éviter une perte d'adhérence.

On connaît, dans l'état de la technique, un système, développé par l'entreprise Pirelli, qui estime en temps réel une vitesse sécuritaire liée à une courbure locale de la route, et qui la compare avec une vitesse instantanée du véhicule. Toutefois, ce système présente plusieurs inconvénients.

D'une part, ce système utilise un potentiel d'adhérence constant, en fonction du type de pneumatique installé sur le véhicule, sans prendre en compte les conditions environnementales, l'état du pneumatique ou la vitesse du véhicule. Or, on sait que ces éléments ont une influence forte sur le potentiel d'adhérence ; ainsi, sur une route mouillée, le potentiel d'adhérence à haute vitesse est, par exemple, beaucoup plus faible qu'à basse vitesse, en particulier pour un pneu usé.

En outre, le système proposé ne permet pas de préconiser une vitesse pour un prochain évènement de trajet, mais indique au conducteur qu'il est dans une situation risquée en termes d'adhérence du véhicule. Ce système ne permet donc pas une anticipation du conducteur pour appréhender le prochain évènement, par exemple un virage, dans des conditions sécuritaires de roulage.

On connaît également le document EP 2817189 A1 qui propose un contrôle de la vitesse du véhicule selon un seuil d'adhérence entre le pneu du véhicule et le sol. Ce seuil d'adhérence est détectable par des systèmes conventionnel de mesure du glissement ou de mesure du moment de réaction appliqué au centre roue du pneumatique.

La présente invention vise à remédier à ces inconvénients en proposant une solution permettant la détermination en temps réel d'une vitesse limite de roulage, et son utilisation pour fournir à un véhicule et/ou à un conducteur des informations d'aide à la conduite pertinentes.

BREVE DESCRIPTION DE L'INVENTION

Ainsi, l'invention concerne un procédé de détermination d'une vitesse limite de roulage selon la revendication 1.

Par « « évènement de trajet » on entendra, dans la suite de la description, toute portion caractéristique d'un trajet à venir, par exemple mais non exclusivement : un virage, un segment de route avec une forte pente ou un fort dévers, un segment de route présentant une adhérence particulièrement faible, par exemple à cause d'une plaque de verglas, d'une zone gravillonnée ou de tout autre évènement.

On précise également que, par « potentiel d'adhérence disponible », on entend le potentiel d'adhérence maximal disponible à un instant donné.

### I - Estimation d'un potentiel d'adhérence disponible

L'estimation d'un potentiel d'adhérence peut être effectuée en temps réel, c'est-à-dire qu'on estime le potentiel du couple pneumatique/sol, sur lequel le véhicule est en train de rouler, à l'instant où on fait l'estimation. Dans un mode de réalisation particulier, le potentiel d'adhérence estimé à un instant n est considéré comme identique à un instant n+1 si les paramètres ayant une influence sur l'adhérence n'ont pas changé entre les instants n et n+1.

L'estimation peut également être effectuée par anticipation sur un trajet à venir connu, soit parce que le trajet a été enregistré dans un navigateur du véhicule, soit parce qu'il est possible, à partir d'une position GPS du véhicule, de connaître la route sur laquelle se déplace le véhicule.

### I-1-Détermination des paramètres influents

Dans un mode de réalisation particulier, un procédé selon l'invention comprend une étape initiale de détermination des paramètres influents sur le potentiel d'adhérence, ces paramètres étant compris dans le groupe comprenant le grip number de la chaussée ou d'autres indicateurs normalisés d'adhérence des routes, la hauteur au sable de la route ou profondeur moyenne de texture appelée PMT, la hauteur d'eau sur la chaussée, la température du sol et de l'air environnant, la vitesse de roulage et l'ensemble des caractéristiques du pneumatique ayant une influence sur l'adhérence, notamment mais non exclusivement la pression du pneumatique, sa hauteur de sculpture, sa charge, et le type de pneumatique.

Ces paramètres influents sont fournis directement par le véhicule, et/ou fournis par un système extérieur, et/ou mesurés en temps réel. Ainsi, par exemple, le grip number de la chaussée ou d'autres indicateurs normalisés d'adhérence des routes peuvent être fournis par des cartographies préexistantes. La température peut être mesurée en temps réel, par exemple par des capteurs disponibles aujourd'hui sur un véhicule.

Les paramètres du pneumatique, tels que la pression, la hauteur de sculpture, la charge et la vitesse de roulage peuvent être déterminés par des systèmes embarqués dans le véhicule ou dans les pneumatiques.

Dans un mode de réalisation qui ne fait pas partie de la présente invention, l'étape initiale de détermination de paramètres influents comprend une étape de mesure de la puissance sonore générée par le pneumatique lors du roulage, et une étape de détermination de la hauteur d'eau sur la chaussée, et de la hauteur de sculpture en fonction de cette puissance sonore. Dans un autre mode de réalisation particulier, la macro-texture de la route est également déterminée en fonction de cette puissance sonore. A cet effet, le véhicule dans lequel un procédé selon l'invention est mis en œuvre doit être muni d'un microphone installé au niveau des pneumatiques ou dans les parechocs avant ou arrière du véhicule.

Le nombre de paramètres ayant un impact potentiel sur le bruit du pneumatique peut être important. Toutefois, il apparait que certains paramètres ont une influence faible ou de deuxième ordre sur la nature du bruit généré par le pneumatique. Cela peut être le cas par exemple de la pression interne du pneumatique ou encore de la charge du pneumatique.

Ainsi, il apparait que l'état météorologique de la route, caractérisé par une hauteur d'eau sur la chaussée, semble être un paramètre de premier ordre. Son impact sur le bruit du pneumatique est très important et surtout faiblement dépendant de tous les autres paramètres tels que l'état du revêtement de la route, l'état d'usure du pneumatique ou encore le type de sculpture du pneumatique. Ces autres paramètres sont aussi susceptibles dans une moindre mesure de faire varier le bruit de roulage pour autant que l'on sache discerner leurs signatures acoustiques propres.

Concernant cette hauteur d'eau, on différencie une route sèche d'une route humide, caractérisée par une hauteur d'eau affleurant les rugosités naturelles du revêtement de la route, ou d'une route mouillée pour laquelle la hauteur d'eau dépasse le niveau des rugosités naturelles du revêtement de la route.

Dans un exemple de réalisation, cette hauteur d'eau sur la route, est estimée en utilisant l'un des moyens compris dans le groupe comprenant :

- des stations météos fixes installés en bord de route, et comprenant des moyens de communiquer aux véhicules roulant sur la route la hauteur d'eau lors de leur passage,

- des capteurs optiques embarqués sur le véhicule,

- des modèles analytiques permettant d'estimer une hauteur d'eau résiduelle en fonction de données météorologiques connues (quantité de précipitations, ensoleillement ...) ou de données concernant la route (drainabilité, dévers, trafic ...).

Concernant la profondeur moyenne de texture, un revêtement est qualifié de revêtement fermé lorsqu'il prend un aspect lisse et sans macro-rugosités, comme par exemple un bitume ayant ressué après avoir subi de fortes chaleurs. Un revêtement sera considéré comme ouvert, lorsque les macro-rugosités sont importantes comme celles d'un revêtement usé ou celui d'une route de campagne réparée rapidement à l'aide d'un enduit superficiel réalisé par projection de cailloux sur du bitume. Un revêtement medium décrit tous les revêtements dans un état intermédiaire entre les deux états précédents et qualifie plus particulièrement les revêtements neufs. On peut ainsi catégoriser les différentes macro-textures de la façon suivante : un revêtement à macro-texture fermée présente une PMT comprise entre 0 et 0.4 millimètres. Un revêtement à macro-texture medium présente une PMT entre 0.4 et 1.1 millimètres, et un revêtement à macro-texture ouverte présente une PMT supérieure à 1.1 millimètres. On sait que la macro-rugosité d'un revêtement influence fortement le bruit engendré par le pneumatique. En particulier, le phénomène de pompage de l'air emprisonné entre le sol et la sculpture du pneumatique, est d'autant plus prononcé que le revêtement de la route est fermé. La connaissance en temps réel de l'état d'une route peut s'avérer utile dans le cas où, par exemple, cette information est retournée par un grand nombre de véhicules ou une flotte de véhicules dédiés, vers un système centralisé de suivi et d'entretien du réseau routier.

Concernant la hauteur de sculpture du pneumatique, qui caractérise son état d'usure, on distingue l'état neuf, l'état usé, et un état intermédiaire considéré ici comme l'état du pneumatique à mi- usure. Une information de l'évolution dans le temps de la caractéristique d'usure, est utile, surtout si elle est couplée à l'information de l'état météorologique de la route. En effet, il est connu qu'un véhicule équipé de pneumatiques usés qui roule sur un revêtement mouillé risque plus facilement de perdre son adhérence que s'il avait des pneus neufs.

Dans un mode de réalisation, l'estimation d'une hauteur de sculpture restante, est donnée en temps réel par l'un des moyens compris dans le groupe comprenant :

- Des capteurs embarqués dans le pneumatique,

- Des capteurs optiques évaluant l'évolution de la hauteur de sculpture, ces capteurs étant embarqués sur le véhicule ou installés au sol,

- Des capteurs magnétiques,

- Des modèles d'usure embarqués prenant en compte le kilométrage parcouru, l'usage, le type véhicule, des points de mesure d'usure réalisés par des moyens mécaniques ou optiques ...

Le type de sculpture du pneumatique est, par exemple, une sculpture de type été ou une sculpture de type hiver. Ces deux types de pneumatiques se distinguent essentiellement par des bandes de roulement ayant des sculptures différentes, plus directionnelles, fortement entaillées et lamélisées dans le cas des sculptures hiver, moins directionnelles et moins entaillées dans le cas des sculptures été, ainsi que par la nature des matériaux formant la bande de roulement, plus tendre dans le cas des pneumatiques hiver, et plus dure dans le cas des pneumatiques été. Ces caractéristiques ne sont pas sans influence sur le comportement et la tenue de route du véhicule, et donc sur son adhérence.

**I-2 -Méthode utilisant un modèle mathématique**

Connaissant les paramètres influents, plusieurs modes de réalisation sont envisageables pour la détermination du potentiel d'adhérence disponible. Dans un premier mode de réalisation préférentiel, on utilise ainsi une formule mathématique permettant d'estimer ce potentiel d'adhérence en fonction de la vitesse. Ainsi, on peut calculer le potentiel comme suit :
$\mu_{max}$= f(micro-rugosités du sol, vitesse, hauteur au sable, hauteur d'eau, hauteur sculpture, pression de gonflage, charge).
Cette fonction est spécifique à chaque pneumatique accessible sur le marché et homologué. Tout ou partie des paramètres indiqués dans cette expression ont auparavant été mesurés et/ou déterminés au préalable, comme précédemment décrit.

**I-3 -Méthode utilisant des abaques**

Dans un autre mode de réalisation, l'étape de détermination d'un potentiel d'adhérence en fonction de la vitesse est effectuée par la mise en œuvre d'abaques de niveau d'adhérence prédéterminés. Dans ce mode de réalisation, plusieurs étapes sont mises en œuvre, et seront ultérieurement décrites en détail à l'aide de figures :

- On construit des abaques de niveau d'adhérence en fonction de paramètres influents et de leur disponibilité,
- On mesure, en temps réel, les valeurs de ces paramètres,
- On sélectionne l'abaque correspondant aux valeurs des paramètres, et

- On lit, sur l'abaque, la valeur estimée du potentiel d'adhérence, pour la vitesse réelle de roulage.

**I-4 - Méthode par rayon de roulement**

Selon la présente invention, l'étape de détermination d'un potentiel d'adhérence disponible comprend les étapes suivantes :

- on évalue l'évolution d'un rayon de roulement du pneumatique en fonction de conditions de roulage prédéterminées dudit pneumatique sur des sols d'adhérence variable et connues, pour constituer une base de données expérimentales,
- à partir de la base de données expérimentales, on établit un modèle d'estimation du potentiel d'adhérence en déterminant une fonction reliant le potentiel d'adhérence au rayon de roulement et à des paramètres véhicule,
- en cours de roulage du pneumatique, on détermine le rayon de roulement et, par application dudit modèle, et en fonction des paramètres véhicules, on évalue le potentiel d'adhérence dudit pneumatique.

Une fois le potentiel d'adhérence disponible estimé, un procédé selon l'invention prévoit de déterminer un besoin d'adhérence, en fonction de la situation de roulage du véhicule, et des caractéristiques de conduite du conducteur du véhicule.

**II - Estimation d'un besoin d'adhérence**

**II - 1 - Estimation d'un prochain évènement de trajet**

Dans un mode de réalisation, pour déterminer un besoin d'adhérence sur un segment de trajet à venir, on détecte ou on identifie les évolutions des propriétés géométriques d'un segment de trajet à venir, par exemple la courbure, le dévers ou la pente. On détecte également la position du prochain évènement de trajet, tel qu'un virage, une intersection ou un arrêt obligatoire.
Afin de détecter ces éléments, il est utile de connaître le trajet, ou au moins une partie du trajet, effectué par le véhicule. Dans un mode de réalisation avantageux, le trajet est programmé dans le navigateur GPS du véhicule, par exemple pour aider à la navigation du conducteur, et il est aisé de connaître le prochain évènement de trajet.
Dans un autre mode de réalisation, le trajet n'est pas programmé dans le véhicule, et il est alors nécessaire de détecter la route sur laquelle se déplace le véhicule, en utilisant un procédé dit de « map-matching », ou recalage cartographique, qui permet de comparer régulièrement des positions GPS du véhicule avec des données cartographiques, afin de déterminer le trajet emprunté.
Connaissant les coordonnées du prochain évènement de trajet, il est alors possible de déterminer un ensemble de points géopositionnés, décrivant ce prochain évènement de trajet ; on dispose alors d'une table de points décrivant une trajectoire approximative qui sera prise par le conducteur.

### II - 2 - Estimation du besoin d'adhérence sur le prochain évènement

Connaissant la trajectoire approximative prise par le conducteur sur le prochain évènement de trajet, il est alors possible d'estimer le besoin d'adhérence sur cet évènement. En effet, on sait qu'un véhicule de masse M soumis à un évènement est le siège d'une accélération $\gamma$ (V) qui s'exerce dans le plan du véhicule. En utilisant un modèle analytique du véhicule complet, on peut déduire entre autres de cette accélération $\gamma$(V), les efforts au centre roue $F_x$, $F_y$ et $F_z$ pour chaque pneumatique du véhicule, et calculer en conséquence le besoin d'adhérence $\mu_{pneu}$(V) au niveau de chaque pneu sur cet évènement du trajet défini par :

$$\mu_{pneu} = \frac{\sqrt{F_x{}^2 + F_y{}^2}}{F_z}$$

On précise ici que, dans le repère du pneumatique, on désignera par l'axe OX l'axe représentant la direction circonférentielle du pneumatique, par OY l'axe parallèle à l'axe de rotation du pneumatique ou axe transversal, et par OZ l'axe normal à l'axe de rotation du pneumatique, ou axe radial.

Dans un mode de réalisation, on utilisera une première hypothèse simplificatrice qui permet d'obtenir un besoin d'adhérence avec une précision à l'ordre 0. Dans le cas où le prochain évènement est une courbe, on sait que lorsqu'un véhicule de masse M est inscrit à vitesse donnée constante dans un virage de rayon de courbure R, l'accélération subie par le véhicule, et dont l'effort conséquent est repris par la chaussée, est définie, par $\gamma_y$(V) = V²/R, en l'absence de pente et de dévers.

Selon une seconde hypothèse simplificatrice, considérant le cas où tous les pneus sont identiques et subissent les mêmes conditions, on sait que le principe d'équilibre des efforts entre ceux produits par le véhicule sur le sol et ceux que le contact pneu/chaussée transmet permet d'établir la formule g.$\mu$(V) = $\gamma$ (V), g étant l'accélération de la gravité (en m/s²), $\gamma$(V) étant l'accélération dans le plan du véhicule (en m/s²).

Il est en outre utile, que le prochain évènement soit un virage ou tout autre, de connaître la pente ou le dévers de la route pour estimer de la même façon une accélération subie par le véhicule, et donc un besoin d'adhérence.

Dans un mode de réalisation, le prochain évènement de trajet est un segment de trajet à adhérence faible, par exemple une plaque de verglas ou un autre élément sur la chaussée. Le véhicule peut avoir connaissance en anticipation de la présence de segment à faible adhérence par la réception de données externes, en provenance notamment mais non exclusivement d'un autre véhicule, et où de dispositifs installés sur le bord de la route, et/ou de cartographies et/ou de données issues d'exploitants routiers.

On précise ici que, dans un mode de réalisation simplifié, on considèrera que les conditions d'adhérence sur le trajet à venir sont les mêmes que les conditions d'adhérence à l'endroit où se trouve le véhicule lorsque le procédé est mis en œuvre en anticipation.

Toutefois, dans certains cas, il est avantageux de tenir compte des conditions d'adhérence spécifiques sur le trajet à venir, par exemple dans le cas d'une route dont le Grip Number change.

### III - Détermination de la vitesse limite de roulage

Lorsque l'évènement de trajet à venir est une courbe, en chaque point une courbure peut être estimée et une vitesse limite sécuritaire peut être déterminée par la condition de limite d'adhérence disponible des pneumatiques. Ainsi, la vitesse limite sur un évènement est celle qui permet de réaliser l'égalité entre besoin d'adhérence et potentiel d'adhérence, soit $\mu$(V) = $\mu_{max}$(V)

Dans le cas où tous les pneus sont identiques et subissent les mêmes conditions, et en l'absence de dévers et de pente, le principe d'équilibre des efforts entre ceux produits par le véhicule sur le sol et ceux que le contact pneu/chaussée est capable de transmettre permet d'établir la formule :

$$\gamma_y(V_{lim}) = (V_{lim})^2/R = g\,\mu_{max}(V_{lim}),$$

où g étant l'accélération de la gravité (en m/s²). La résolution en temps réel de cette équation implicite permet d'estimer la vitesse limite sécuritaire $V_{lim}$ sur le virage cible. Cette méthode, basée sur des hypothèses simplificatrices, permet toutefois de fixer les ordres de grandeur et d'initialiser une vitesse cible.

Dans un mode de réalisation, cette vitesse limite sécuritaire sera corrigée avec une marge de sécurité. En effet, en l'absence de la connaissance des accélérations $\gamma_x$ à venir, issues des actions de freinage ou d'accélération du conducteur et/ou d'une pente de la route, il est utile de diminuer la vitesse limite sécuritaire afin de ne pas risquer une perte d'adhérence qui serait induite par une consommation d'adhérence en longitudinale qui diminue de fait l'adhérence disponible en transverse.

Dans un autre exemple de réalisation où le prochain évènement de trajet est, par exemple, une ligne droite présentant une forte pente et/ou un fort dévers, on estimera l'accélération conséquente subie par le véhicule, et on déterminera alors la vitesse limite à ne pas dépasser pour que cette accélération permette de respecter les limites d'adhérence. Il en va de même pour tout autre évènement de trajet.

En outre, et en considérant que l'information d'une vitesse limite sans cesse fluctuante n'est pas pertinente pour le conducteur, les hypothèses suivantes ont été utilisées dans le mode de réalisation choisi:

- On suppose que sur les zones de courbure les plus fortes d'un virage (l'apex), l'accélération est en très grande majorité transversale, ce qui est assez bien vérifié. La marge d'erreur induite par cette hypothèse est reportée sur la barre d'erreur de l'affichage de la vitesse limite. L'équation est résolue pour tous les maxima locaux de courbures détectée sur la distance projetée, et

- On suppose qu'autour la vitesse limite, tous les pneus sont au potentiel d'adhérence maximal disponible.

### IV- Dispositif d'alerte et d'information du conducteur

La vitesse limite de roulage ainsi déterminée peut être indiquée au conducteur de manière visuelle, pour lui permettre d'adapter sa conduite. Dans le cas où le prochain évènement de trajet est un virage, l'affichage de l'information sera différent selon que le prochain virage à venir sur le trajet est un virage indépendant, ou s'il est enchaîné à un ou plusieurs autres virages. On considérera des visages comme enchaînés si la distance qui les sépare est inférieure à un certain seuil, par exemple 40 mètres.

Ainsi, dans le cas d'un virage indépendant, on affichera, par exemple, la vitesse limite pour ce virage. On pourra également, de manière optionnelle, afficher la distance pour atteindre ce virage, et la direction du virage.

Dans le cas d'un enchainement de virage on affichera par exemple la vitesse limite la plus basse de l'ensemble des vitesses limites des virages composant l'enchainement, et optionnellement la distance pour atteindre le début de l'enchainement. La vitesse limite affichée est mise à jour au fur et à mesure de l'avancement dans l'enchaînement, pour être toujours égale au minimum des vitesses limites des virages restants dans l'enchaînement.

Par ailleurs, la vitesse limite sécuritaire étant déterminée par anticipation il est utile, dans un mode de réalisation de l'invention, de prendre en compte le potentiel d'adhérence disponible en temps réel pour avertir le conducteur sur un risque de non-respect à terme de cette condition. Ainsi, dans certaines situations, il est utile d'indiquer au conducteur du véhicule qu'il est déjà temps de freiner s'il veut pouvoir respecter la vitesse préconisée pour le prochain virage. Cet avertissement peut prendre la forme d'une alerte sonore ou visuelle, par exemple en faisant clignoter l'affichage de vitesse qui sera ultérieurement décrit à l'aide de figures.

BREVE DESCRIPTION DES FIGURES

D'autres objectifs et avantages de l'invention apparaîtront clairement dans la description qui va suivre d'un mode de réalisation préféré mais non limitatif, illustré par les figures suivantes dans lesquelles :

- La figure 1 montre un exemple d'abaques utilisables dans un procédé selon l'invention, pour la détermination d'un potentiel d'adhérence disponible en fonction de la vitesse,

- les figures 2a, 2b et 2c montrent des exemples d'affichage dans un véhicule d'une information de vitesse limite sécuritaire, et

- Les figures 3a et 3b montrent des exemples de mise en œuvre d'un procédé selon l'invention dans un véhicule.

DESCRIPTION DU MEILLEUR MODE DE REALISATION DE L'INVENTION

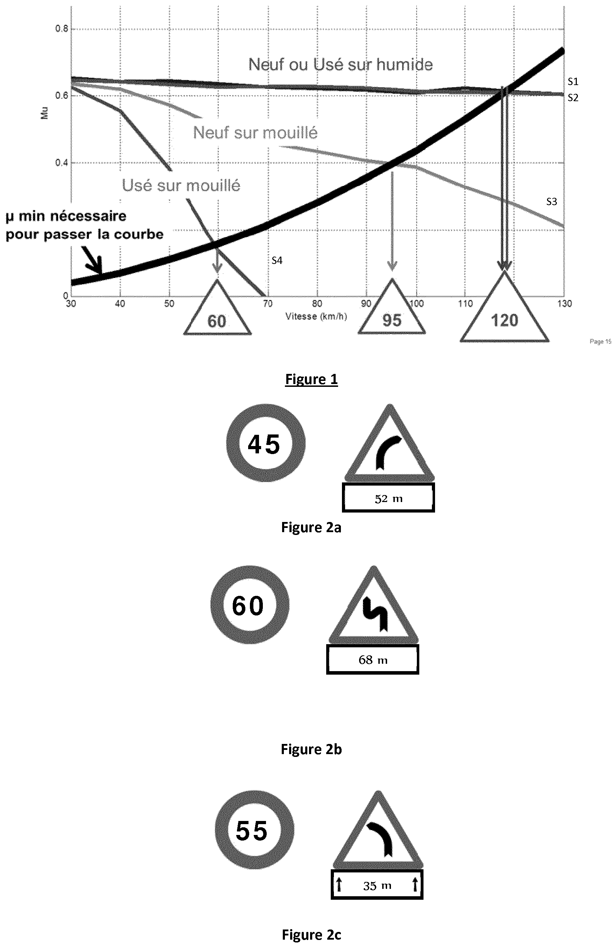

La figure 1 montre un exemple d'abaques utilisables dans un procédé selon l'invention, pour la détermination d'un potentiel d'adhérence.

De manière préférentielle, les abaques sont paramétrés en fonction des paramètres influents qui sont disponibles lors d'une mise en œuvre de l'invention, par exemple la hauteur d'eau et la hauteur sculpture, et sont tracés en fonction de la vitesse de roulage.

Le nombre d'abaques à créer est donc fonction du nombre de valeurs de ces grandeurs que nous allons mesurer. Typiquement si on sait mesurer 2 niveaux d'usure (neuf/usé) et 2 niveaux d'état d'humidité (sec/mouillé), on créera 4 abaques correspondant aux combinaisons possibles de ces 2 états. Si certaines combinaisons conduisent à des résultats d'adhérence très proches, on pourra réduire le nombre d'abaques.

Les abaques sont construits en plusieurs étapes :

Dans un premier temps, on détermine une distribution statistique de chacune des entrées du modèle. On calcule autant d'abaques qu'il y aura de combinaison de ces paramètres mais chacune est calculée avec un écart type très réduit autour de la valeur du paramètre mesuré. Typiquement, l'identification d'un pneu usé permet de réduire la distribution à 2mm±1.5mm au lieu de 5mm ±4mm en l'absence de cette information. La précision de l'estimation d'adhérence s'en trouve largement améliorée.

- On effectue un tirage aléatoire de N combinaisons choisies dans ces distributions des paramètres d'entrées (typiquement N = 1000 ou 10000).

- On calcule N variantes de $\mu$ avec ces N combinaisons pour P cas de vitesses (typiquement 11 cas de vitesses variant de 30 à 130 km/h par pas de 10km/h)

- On trace ainsi N courbes μ(V), chacune correspondant à un tirage parmi N combinaisons de paramètres d'entrée.

- On extrait enfin de ce faisceau de courbe le percentile qui nous intéresse en fonction du risque d'estimation visé, par exemple la limite des 10% ou 1% de μ les plus bas.

- En sortie de cette étape, on dispose donc d'une courbe μ(V) pour chacune de combinaison possible des paramètres influents.

Ainsi, la figure 1 montre quatre courbes sur lesquelles :

- S1 est l'adhérence disponible pour un pneu neuf, sur une route humide,

- S2 est l'adhérence disponible pour un pneu usé, sur une route humide,

- S3 est l'adhérence disponible pour un pneu neuf sur une route mouillée, et

- S4 est l'adhérence disponible pour un pneu usé, sur une route mouillée.

Il apparaît clairement dans l'exemple ci-dessous que ces informations créent 3 classes de potentiel d'adhérence significativement différentes.

Cette approche permet de réduire le nombre d'informations à stocker sans perdre de qualité de prédiction puisque les calculs précis sont réalisés en amont de l'exploitation.

Sur cette figure 1 est également affichée, sous forme de courbe noire, le besoin d'adhérence nécessaire pour un prochain évènement de trajet à venir, en fonction de la vitesse de roulage. Pour un rayon de courbure R connu, le besoin d'adhérence en fonction de la vitesse est une parabole définie par $V^2/R$.

Pour chacune des situations représentées aux courbes S1 à S4, la vitesse limite sécuritaire correspond à l'intersection de la courbe noire avec chacune de ces courbes. On constate alors sur la figure 1 qu'avec des pneus usés sur une route mouillé, la vitesse limite sécuritaire pour passer le prochain évènement de trajet est 60 km/h. Cette vitesse passe à 95 km/h dans le cas de pneus neufs sur route mouillée, et à 120 km/h dans le cas d'une route humide, quel que soit l'état des pneumatiques.

Une fois cette vitesse sécuritaire déterminée, l'invention prévoit, dans un mode de réalisation avantageux, un affichage dont plusieurs exemples sont illustrés sur les figures 2a à 2c. La figure 2a montre un exemple d'affichage à l'approche d'un virage indépendant, c'est à dire non compris dans un enchainement de virages.

Dans ce cas, on affiche, dans un panneau circulaire, la vitesse à respecter pour le prochain virage. On peut également afficher, dans un panneau triangulaire, la distance pour atteindre le prochain virage, et la direction de courbure.

La figure 2b montre un exemple d'affichage à l'approche d'un enchainement de virages. Le panneau de vitesse indique la vitesse sécuritaire la plus basse parmi l'ensemble des virages de l'enchainement. Le panneau triangulaire indique la distance séparant le véhicule du premier virage de l'enchainement, et le fait que les virages enchainés ne sont pas tous dans la même direction.

La figure 2c montre un exemple d'affichage pendant un enchaînement de virages. Le panneau de vitesse indique la vitesse sécuritaire la plus basse parmi l'ensemble des virages restants à parcourir dans l'enchainement, et le panneau triangulaire indique la distance à parcourir avant la fin de l'enchainement.

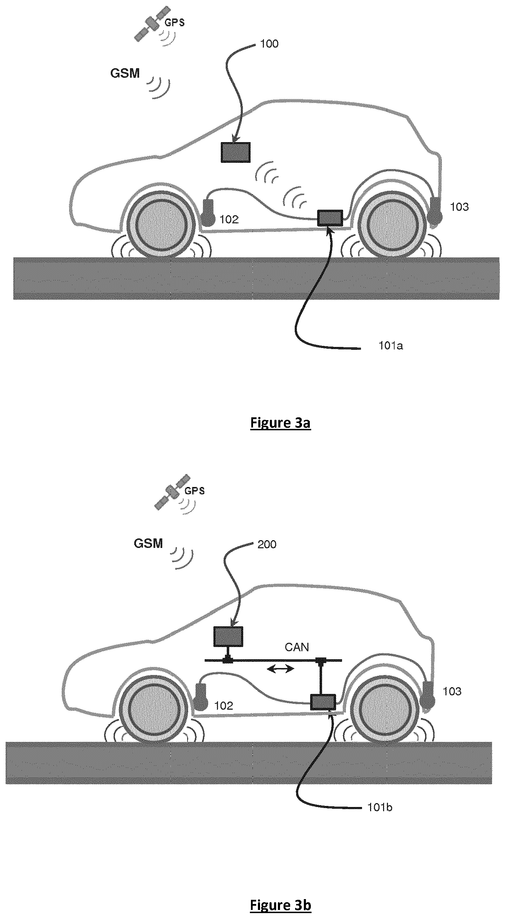

Les figures 3a et 3b montrent des exemples de mise en œuvre d'un procédé selon l'invention dans un véhicule. La figure 3a montre plus particulièrement une mise en œuvre faisant appel à un dispositif connecté non intégré au véhicule, de type Smartphone ou tablette. Ainsi, dans ce mode de réalisation, le dispositif 100 comprend des moyens de communications GSM permettant de recevoir des données externes telles que des cartographies ou des informations concernant le trafic ou autres. En outre le dispositif 100 comprend des moyens pour recevoir des informations permettant la géolocalisation GPS du véhicule ou une détermination de la vitesse du véhicule.

Le véhicule comprend également un calculateur 101a installé dans le véhicule, et relié à différents capteurs tels que des microphones 102 et 103.. Ce calculateur 101a comprend des moyens de traitement des signaux issus des capteurs 102 et 103 afin d'obtenir des informations concernant une hauteur d'eau sur la route, une profondeur de texture de la route, un état d'usure ou de pression du pneumatique. Dans un autre mode de réalisation, non représenté sur la figure, le véhicule comprend en outre d'autres capteurs, tels que des capteurs de température, d'usure, de pression ... installés directement sur le véhicule et/ou sur les pneumatiques. Dans ce cas, le calculateur 101a comprend des moyens de traitement des signaux issus de l'ensemble des capteurs

Après traitement, les informations sont envoyées du calculateur 101a vers le dispositif 100, qui met en œuvre un procédé selon l'invention pour déterminer une vitesse limite de roulage, et l'afficher sur un écran intégré dans le dispositif 100.

Dans l'exemple montré sur la figure 3b, un procédé selon l'invention est mis en œuvre directement dans le calculateur 101b du véhicule. Comme précédemment, ce calculateur est relié à des capteurs 102 et 103 qui ont les mêmes fonctions que dans l'exemple de la figure 3a. En revanche, dans cet exemple, le calculateur 101b est relié au bus CAN du véhicule, afin de lire des informations telles que les vitesses et/ou accélérations du véhicule.

Le module d'affichage et de commande 200 intégré au véhicule comprend des moyens de communications GSM permettant de recevoir des données externes telles que des cartographies ou des informations concernant le trafic ou autres et des moyens pour recevoir des informations permettant la géolocalisation GPS du véhicule. Il peut mettre à disposition ces informations au calculateur 101b sur le bus de communication CAN.

Ce module 200 est également muni de moyens d'affichage permettant d'afficher la vitesse limite de roulage déterminée, afin d'informer le conducteur..

Dans un exemple de réalisation, les caractéristiques du pneumatique sont prises en compte pour la mise en œuvre du procédé. A cet effet, ces caractéristiques sont stockées dans une mémoire du véhicule, et/ou un identifiant du pneumatique est lu par un lecture de type RFID, et associé à des caractéristiques stockées dans une base de données, et/ou le modèle d'adhérence mis en œuvre dans le calculateur 101b ou dans le dispositif 100, est choisi parmi un ensemble de modèles d'adhérence en fonction d'un identifiant du pneumatique.

**Revendications**

1. Procédé de détermination d'une vitesse limite de roulage pour un conducteur au volant d'un véhicule, le procédé comprenant les étapes suivantes au cours desquelles:

    - On estime le potentiel d'adhérence disponible à un instant donné entre un pneumatique du véhicule et la chaussée sur laquelle roule le pneumatique, en fonction de paramètres influents connus et/ou mesurés
    - On détermine un besoin d'adhérence sur un évènement de trajet à venir, en fonction de la situation de roulage du véhicule et des caractéristiques de conduite du conducteur du véhicule,
    - On détermine, en fonction de ce besoin d'adhérence et du potentiel d'adhérence estimé, une vitesse limite de roulage sur le prochain évènement de trajet permettant de ne pas dépasser le potentiel d'adhérence
    - Le procédé comprenant en outre une étape initiale de détermination des paramètres influents sur le potentiel d'adhérence, ces paramètres comprenant au moins, la hauteur d'eau sur la chaussée ;et

    **caractérisé en ce que** l'étape d'estimation d'un potentiel d'adhérence disponible comprend les étapes suivantes :

    - On évalue l'évolution d'un rayon de roulement du pneumatique en fonction de conditions de roulage prédéterminées dudit pneumatique sur des sols d'adhérences variables et connues, pour constituer une base de données expérimentales,
    - À partir de la base de données expérimentales, on établit un modèle d'estimation du potentiel d'adhérence en déterminant une fonction reliant le potentiel d'adhérence au rayon de roulement et à des paramètres véhicule,
    - En cours de roulage du pneumatique, on détermine le rayon de roulement et, par application dudit modèle, et en fonction des paramètres véhicules, on évalue le potentiel d'adhérence dudit pneumatique.

2. Procédé de détermination selon la revendication 1, dans lequel l'étape de détermination d'un besoin d'adhérence comprend les sous-étapes suivantes :

    - L'étape d'identifier un prochain évènement de trajet, et
    - L'étape de détermination d'un ensemble de points géopositionnés formant l'évènement.

3. Procédé de détermination selon la revendication 2, comprenant en outre :

    - L'étape de déterminer un rayon de courbure de ce prochain évènement à venir, et
    - L'étape de déterminer le besoin d'adhérence en fonction de ce rayon de courbure et d'un modèle analytique du véhicule.

4. Procédé de détermination selon l'une des revendications précédentes, dans lequel la vitesse limite de roulage est corrigée par un facteur correctif permettant de prendre en compte des actions conducteur sur le prochain évènement de trajet.

5. Procédé de détermination selon la revendication 1, comprenant une étape initiale de détermination de paramètres influents sur le potentiel d'adhérence, ces paramètres étant compris dans le groupe comprenant le grip number ou des indicateurs normalisés d'adhérence de la chaussée, la hauteur au sable de la route, la température, la pression du pneumatique, sa hauteur de sculpture sa charge et la vitesse de roulage

6. Procédé selon l'une des revendications précédentes, dans lequel l'étape de détermination d'un potentiel d'adhérence en fonction de la vitesse est effectuée par l'application d'une formule mathématique mise en œuvre par un calculateur électronique présent sur le véhicule.

7. Procédé selon l'une des revendications 1 à 5 dans lequel l'étape de détermination d'un potentiel d'adhérence en fonction de la vitesse est effectuée par la mise en œuvre d'abaques de niveau d'adhérence prédéterminés.

8. Procédé selon la revendication 1 dans lequel l'étape de détermination de la vitesse limite de roulage correspond à une étape de détermination de l'intersection entre le besoin d'adhérence exprimé en fonction de la vitesse de roulage et le potentiel d'adhérence disponible exprimé en fonction de la vitesse de roulage.

9. Procédé selon l'une des revendications précédentes, comprenant une étape d'information d'un conducteur du véhicule de la vitesse limite de roulage déterminée.

## Patentansprüche

1. Verfahren zur Bestimmung einer Fahrgrenzgeschwindigkeit für einen Fahrer am Lenkrad eines Fahrzeugs, wobei das Verfahren die folgenden Schritte umfasst, in deren Verlauf:

   - das zu einem gegebenen Zeitpunkt verfügbare Haftungspotential zwischen einem Reifen des Fahrzeugs und der Fahrbahn, auf welcher der Reifen rollt, in Abhängigkeit von bekannten und/oder gemessenen beeinflussenden Parametern geschätzt wird
   - ein Haftungsbedarf auf einem bevorstehenden Streckenereignis in Abhängigkeit von der Fahrsituation des Fahrzeugs und von den Lenkeigenschaften des Fahrers des Fahrzeugs bestimmt wird,
   - in Abhängigkeit von diesem Haftungsbedarf und von dem geschätzten Haftungspotential eine Fahrgrenzgeschwindigkeit auf dem nächsten Streckenereignis bestimmt wird, die es ermöglicht, das Haftungspotential nicht zu überschreiten
   - wobei das Verfahren ferner einen Ausgangsschritt des Bestimmens der das Haftungspotential beeinflussenden Parameter umfasst, wobei diese Parameter mindestens die Wasserhöhe auf der Fahrbahn umfassen; und

   **dadurch gekennzeichnet, dass** der Schritt des Schätzens eines verfügbaren Haftungspotentials die folgenden Schritte umfasst:

   - Bewerten der Entwicklung eines Rollradius des Reifens in Abhängigkeit von vorbestimmten Fahrbedingungen des Reifens auf Böden mit variablen und bekannten Haftungen, um eine Versuchsdatenbank aufzubauen,

   - ausgehend von der Versuchsdatenbank, Erstellen eines Modells zum Schätzen des Haftungspotentials, indem eine Funktion bestimmt wird, die das Haftungspotential mit dem Rollradius und mit Fahrzeugparametern verknüpft,
   - während des Fahrens des Reifens, Bestimmen des Rollradius und, durch Anwenden des Modells und in Abhängigkeit von den Fahrzeugparametern, Bewerten des Haftungspotentials des Reifens.

2. Verfahren zur Bestimmung nach Anspruch 1, bei dem der Schritt des Bestimmens eines Haftungsbedarfs die folgenden Teilschritte umfasst:

   - den Schritt des Identifizierens eines nächsten Streckenereignisses und
   - den Schritt des Bestimmens einer Menge von geopositionierten Punkten, die das Ereignis bilden.

3. Verfahren zur Bestimmung nach Anspruch 2, umfassend ferner:

   - den Schritt des Bestimmens eines Krümmungsradius dieses bevorstehenden nächsten Ereignisses, und
   - den Schritt des Bestimmens des Haftungsbedarfs in Abhängigkeit von diesem Krümmungsradius und von einem analytischen Modell des Fahrzeugs.

4. Verfahren zur Bestimmung nach einem der vorhergehenden Ansprüche, wobei die Fahrgrenzgeschwindigkeit durch einen Korrekturfaktor korrigiert wird, der es ermöglicht, Fahrerhandlungen auf dem nächsten Streckenereignis zu berücksichtigen.

5. Verfahren zur Bestimmung nach Anspruch 1, umfassend einen Ausgangsschritt des Bestimmens von das Haftungspotential beeinflussenden Parametern, wobei diese Parameter in der Gruppe enthalten sind, die die Grip Number oder standardisierte Haftungsindikatoren der Fahrbahn, die Texturtiefe der Straße, die Temperatur, den Druck des Reifens, seine Profilhöhe, seine Belastung und die Fahrgeschwindigkeit umfasst.

6. Verfahren nach einem der vorhergehenden Ansprüche, wobei der Schritt des Bestimmens eines Haftungspotentials in Abhängigkeit von der Geschwindigkeit durch Anwenden einer mathematischen Formel erfolgt, die von einem in dem Fahrzeug vorhandenen elektronischen Rechner umgesetzt wird.

7. Verfahren nach einem der Ansprüche 1 bis 5, wobei der Schritt des Bestimmens eines Haftungspotentials in Abhängigkeit von der Geschwindigkeit durch das Umsetzen von vorbestimmten Haftungsniveaudiagrammen erfolgt.

8. Verfahren nach Anspruch 1, wobei der Schritt des Bestimmens der Fahrgrenzgeschwindigkeit einem Schritt des Bestimmens des Schnittpunkts zwischen dem in Abhängigkeit von der Fahrgeschwindigkeit ausgedrückten Haftungsbedarf und dem in Abhängigkeit von der Fahrgeschwindigkeit ausgedrückten verfügbaren Haftungspotential entspricht.

9. Verfahren nach einem der vorhergehenden Ansprüche, umfassend einen Schritt des Informierens des Fahrers des Fahrzeugs über die bestimmte Fahrgrenzgeschwindigkeit.

## Claims

1. Method for determining a limit speed for driving for a driver at the steering wheel of a vehicle, the method comprising the following steps during which:

    - the grip potential available at a given instant between a tyre of the vehicle and the roadway on which the tyre is running is estimated as a function of known and/or measured influencing parameters,
    - a need for grip on a future route event is determined as a function of the driving situation of the vehicle and of the driving characteristics of the driver of the vehicle,
    - as a function of this need for grip and of the estimated grip potential, a limit speed for driving on the forthcoming route event is determined that makes it possible to not exceed the grip potential,
    - -the method comprising an initial step of determining parameters influencing the grip

    potential, these parameters comprising, at least, the water depth on the roadway, and **characterized in that** the step of estimating an available grip potential comprises the following steps:

    - the progression of a rolling radius of the tyre is assessed as a function of predetermined conditions for running of said tyre on grounds of variable and known grips, in order to form an experimental database,
    - the experimental database is used to establish a model for estimating the grip potential by determining a function connecting the grip potential to the rolling radius and to vehicle parameters,
    - during running of the tyre, the rolling radius is determined and, by application of said model, and as a function of the vehicle parameters, the grip potential of said tyre is assessed.

2. Determining method according to Claim 1, wherein the step of determining a need for grip comprises the following sub-steps:

    - the step of identifying a forthcoming route event, and
    - the step of determining a set of geopositioned points forming the event.

3. Determining method according to Claim 2, further comprising:

    - the step of determining a radius of curvature of this forthcoming future event, and
    - the step of determining the need for grip as a function of this radius of curvature and of an analytical model of the vehicle.

4. Determining method according to one of the preceding claims, wherein the limit speed for driving is corrected by a correction factor which makes it possible to take into account driver actions on the forthcoming route event.

5. Determining method according to Claim 1, comprising an initial step of determining parameters influencing the grip potential, these parameters being of the group comprising the grip number or standardized indicators of grip for the roadway, the sand depth of the road, the temperature, the tyre pressure, the tread pattern depth thereof, the load thereof, and the driving speed.

6. Method according to one of the preceding claims, wherein the step of determining a grip potential as a function of speed is carried out by applying a mathematical formula implemented by an electronic computer present on the vehicle.

7. Method according to one of Claims 1-5, wherein the step of determining a grip potential as a function of speed is carried out by using predetermined graphs for grip level.

8. Method according to Claim 1, wherein the step of determining the limit speed for driving corresponds to a step of determining the intersection between the need for grip expressed as a function of the driving speed and the available grip potential expressed as a function of the driving speed.

9. Method according to one of the preceding claims, comprising a step of informing the vehicle driver of the determined limit speed for driving.

**Figure 1**

**Figure 2a**

**Figure 2b**

**Figure 2c**

**Figure 3a**

**Figure 3b**

**EP 3 297 886 B1**

**RÉFÉRENCES CITÉES DANS LA DESCRIPTION**

**Documents brevets cités dans la description**

- EP 2817189 A1